Europäisches Patentamt

European Patent Office

Office européen des brevets

(11) Numéro de publication : **0 337 376 B1**

(12) **FASCICULE DE BREVET EUROPEEN**

(45) Date de publication du fascicule du brevet :
04.03.92 Bulletin 92/10

(51) Int. Cl.⁵ : **B61D 1/06, B61D 37/00**

(21) Numéro de dépôt : **89106371.1**

(22) Date de dépôt : **11.04.89**

(54) **Voiture ferroviaire à deux étages.**

(30) Priorité : **14.04.88 FR 8804946**

(43) Date de publication de la demande :
**18.10.89 Bulletin 89/42**

(45) Mention de la délivrance du brevet :
**04.03.92 Bulletin 92/10**

(84) Etats contractants désignés :
**AT BE CH DE ES FR GB GR IT LI LU NL SE**

(56) Documents cités :
**DE-U- 8 619 327**
**FR-A- 1 086 111**
**FR-A- 2 588 173**

(56) Documents cités :
**ZEITSCHRIFT FÜR EISENBAHNWESEN UND VERKEHRSTECHNIK. GLASERS ANNALEN, vol. 108, no. 7/8, juillet/août 1984, pages 204-215, Georg Siemens Verlagsbuchhandlung, Berlin, DE; N. ZEEVENHOVEN: ""Plädoyer" für die Einführung von Doppelstockwagen im nationalen und internationalen (RIC)-Verkehr"**

(73) Titulaire : **GEC ALSTHOM SA**
**38, avenue Kléber**
**F-75116 Paris (FR)**

(72) Inventeur : **Setan, Claude**
**22, rue de la Résistance**
**F-59300 Famars (FR)**

(74) Mandataire : **Weinmiller, Jürgen et al**
**Lennéstrasse 9 Postfach 24**
**W-8133 Feldafing (DE)**

Jouve, 18, rue Saint-Denis, 75001 PARIS

# Description

La présente invention concerne une voiture ferroviaire à deux étages.

Les voitures ferroviaires à deux étages rencontrent un succès commercial croissant de par l'utilisation maximale du gabarit des voitures, autorisant ainsi le transport d'un maximum de passagers pour un coût minimum.

Mais ces voitures à deux étages ne disposent pas de porte-bagages à proximité des passagers car l'espace sous plafond est limité, que ce soit dans l'étage inférieur ou dans l'étage supérieur.

Dans une utilisation type "banlieue", la grande majorité des passagers n'ont que des bagages à mains et le stockage des bagages de dimensions moyennes ne se pose pratiquement pas.

Dans une utilisation type "grandes lignes", le problème du logement des bagages à proximité des passagers devient crucial.

La voiture selon la présente invention, permet de stocker les bagages à proximité des passagers, et ceci dans les deux étages.

La présente invention a pour objet une voiture ferroviaire à deux étages, comportant des cases à bagages, caractérisée en ce que le plancher intermédiaire est abaissé au niveau des rangées de sièges de l'étage supérieur pour obtenir une hauteur sous plafond suffisante permettant l'installation de cases à bagages au plafond de l'étage supérieur, les cases à bagages de l'étage inférieur étant intégrées dans les coffres des sièges de l'étage supérieur.

Selon un premier mode de réalisation applicable à une rangée de deux sièges placés côte à côte, les cases sont disposées dans le sens longitudinal de la voiture pour être accessibles de devant les sièges.

Selon un deuxième mode de réalisation applicable à une rangée à un seul siège, les cases sont disposés perpendiculairement au sens longitudinal de la voiture pour être accessibles du couloir.

Selon une variante de ce deuxième mode, les cases sont disposées dans le sens longitudinal de la voiture pour être accessibles de devant les sièges.

Il est décrit ci-après, à titre d'exemple et en référence aux dessins annexés, une voiture selon l'invention.

La figure 1 montre le premier mode de réalisation, en coupe partielle selon I de la figure 2.

La figure 2 est une vue partielle selon II de la figure 1.

La figure 3 montre le deuxième mode de réalisation, en coupe selon III de la figure 4 et avec un arrachement au niveau d'une case.

La figure 4 est une vue partielle selon IV de la figure 3.

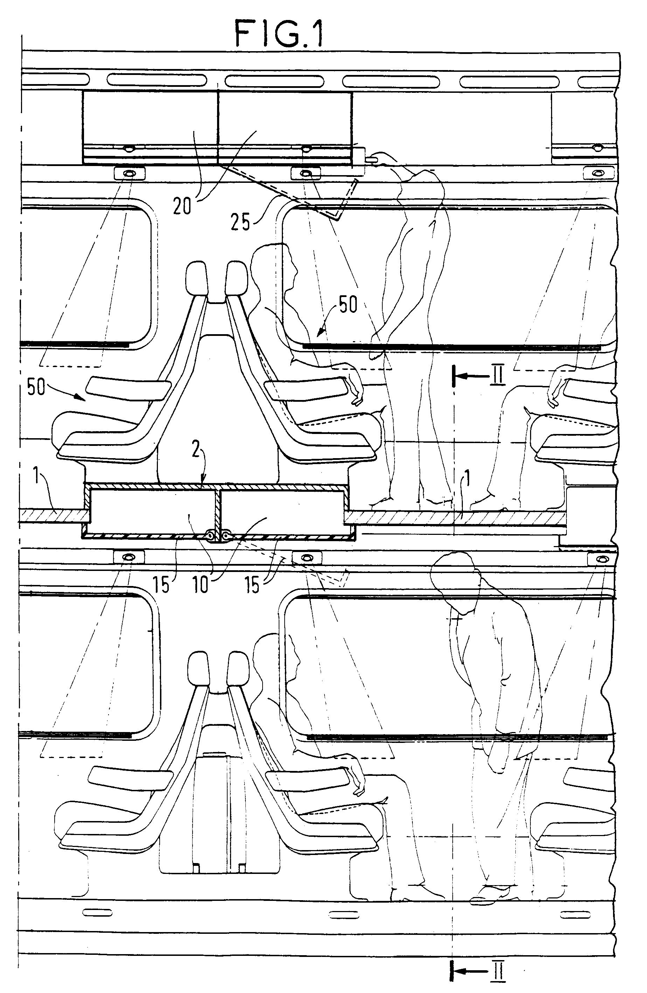

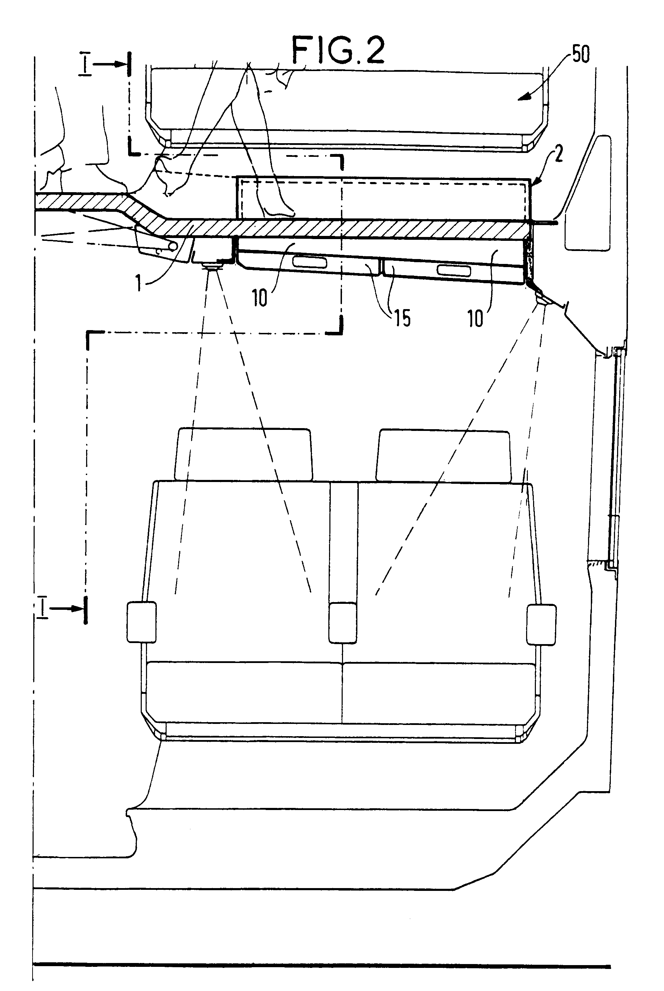

Dans la figure 1, le plancher intermédiaire 1, séparant les deux étages, est surbaissé au niveau des rangées de sièges 50, ceci étant visible dans la figure 2. Ce surbaissement permet de placer des cases à bagages 20 au niveau du plafond de l'étage supérieur, mais il limite la place disponible sous le plafond de l'étage inférieur. Pour remédier à ceci, les cases à bagages 10 de l'étage inférieur sont logées dans les coffres des sièges de l'étage supérieur.

Le plancher intermédiaire est donc interrompu pour permettre l'accès aux coffres.

La longueur des coffres permet de placer deux cases dos à dos et sa largeur permet également de placer deux cases côte à côte. Un coffre 2 permet donc de loger quatre cases 10. Dans l'étage supérieur sont également installées quatre cases 20 quasiment identiques aux cases 10 de l'étage inférieur.

Les quatre cases 10 comportent chacune un capot basculant 15 qui sert de plancher pour les bagages. L'axe d'articulation de ces capots est perpendiculaire à l'axe principal de la voiture, l'ouverture de tels capots s'effectuant alors de devant les sièges.

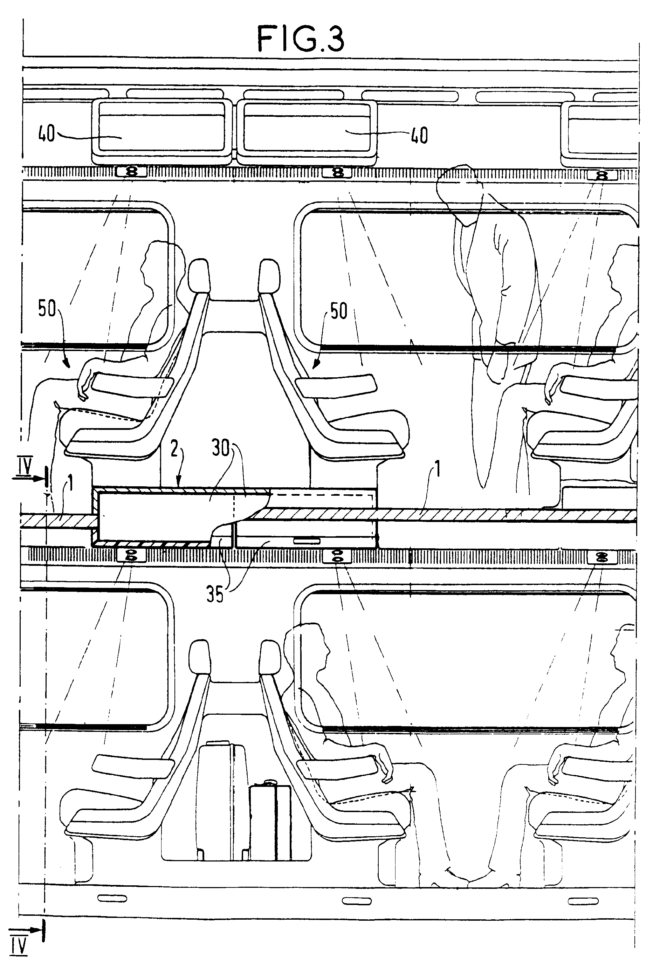

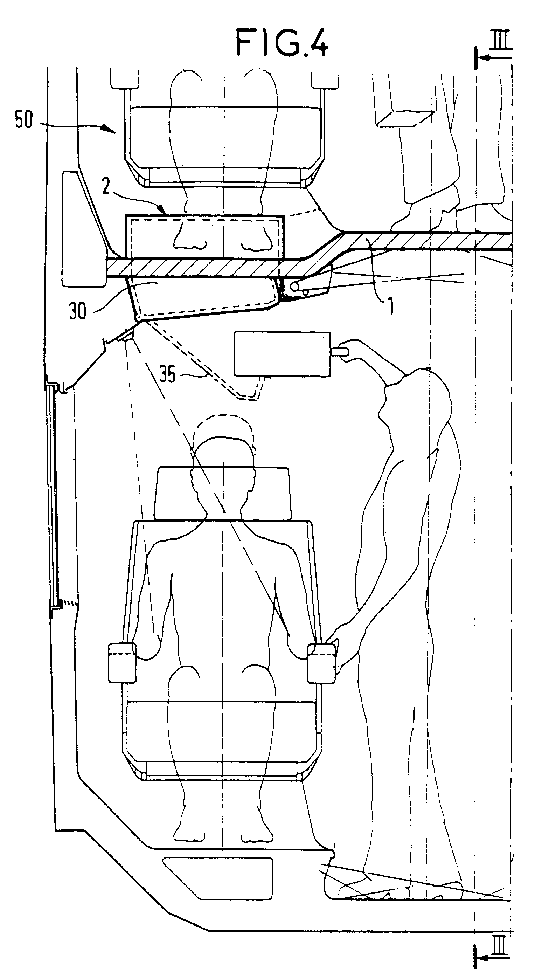

Dans la figure 3, les cases 30 de l'étage inférieur sont ménagées dans les coffres 2 des sièges 50 de l'étage supérieur. La longueur d'un coffre permet de placer deux cases 30 côte à côte, et sa largeur permet de ne placer qu'une seule case. Un coffre 2 permet donc de ne loger que deux cases, ces cases étant accessibles depuis l'allée de circulation comme cela est visible figure 4.

L'étage supérieur comporte également deux cases 40 quasiment identiques à celles de l'étage inférieur.

Les deux cases 30 comportent chacune un capot basculant 35, l'axe d'articulation de ces capots étant parallèle à l'axe principal de la voiture.

Les deux cases 40 ne comportent pas de capots basculants, mais bien entendu elles peuvent, en variante, en comporter un.

Selon une variante de ce deuxième mode de réalisation, les cases 30 et 40 peuvent être disposées dans le sens longitudinal de la voiture comme les cases 10 et 20 du premier mode de réalisation.

# Revendications

1. Voiture ferroviaire à deux étages, comportant des cases (10, 20, 30, 40) à bagages dans chaque étage, caractérisée en ce que le plancher intermédiaire (1) est abaissé au niveau des rangées de sièges de l'étage supérieur pour obtenir une hauteur sous plafond suffisante permettant l'installation de cases à bagages au plafond de l'étage supérieur, les cases à bagages (10, 30) de l'étage inférieur étant intégrées dans les coffres (2) des sièges (50) de l'étage supérieur.

2. Voiture selon la revendication 1, caractérisée en ce que les cases (10, 20) d'une rangée à deux sièges placés côte à côte, sont disposées dans le sens longitudinal de la voiture pour être accessibles de devant les sièges.

3. Voiture selon la revendication 1, caractérisé en ce que les cases (30, 40) d'une rangée à un seul siège, sont disposées perpendiculairement au sens longitudinal de la voiture pour être accessibles du couloir.

4. Voiture selon la revendication 1, caractérisé en ce que les cases d'une rangée à un seul siège, sont disposées dans le sens longitudinal de la voiture pour être accessibles de devant les sièges.

5. Voiture selon l'une des revendications 2, 3 ou 4, caractérisée en ce que les cases (10, 30) de l'étage inférieur comportent des capots basculants (15, 35).

**Patentansprüche**

1. Eisenbahnwagen mit zwei Etagen, der Gepäckabteile (10, 20, 30, 40) aufweist, dadurch gekennzeichnet, daß der Zwischenboden (1) in der Höhe der Sitzreihen der oberen Etage abgesenkt ist, um eine licht Höhe unter der Decke zu erreichen, die ausreicht, um Gepäckabteile an der Decke der oberen Etage anzubringen, während die Gepäckabteile (10, 30) der unteren Etage in die Kästen (2) der Sitze (50) der oberen Etage integriert sind.

2. Wagen nach Anspruch 1, dadurch gekennzeichnet, daß die Gepäckabteile (10, 20) einer Sitzreihe aus zwei nebeneinanderliegenden Sitzen in Längsrichtung des Wagens angeordnet sind, um von der Vorderseite der Sitze her erreichbar zu sein.

3. Wagen nach Anspruch 1, dadurch gekennzeichnet, daß die Gepäckabteile (30, 40) einer Reihe mit nur einem Sitz quer zur Längsrichtung des Wagens angeordnet sind, um vom Gang aus erreichbar zu sein.

4. Wagen nach Anspruch 1, dadurch gekennzeichnet, daß die Gepäckabteile einer Reihe mit nur einem Sitz in Längsrichtung des Wagens angeordnet sind, um von der Vorderseite der Sitze her erreichbar zu sein.

5. Wagen nach einem der Ansprüche 2, 3 oder 4, dadurch gekennzeichnet, daß die Gepäckabteile (10, 30) der unteren Etage Kipp-Deckel (15, 35) aufweisen.

**Claims**

1. A double deck rail car including baggage racks (10, 20, 30, 40) for each deck, characterized in that the intermediate floor (1) is lowered beneath the rows of seats on the top deck in order to make sufficient room beneath the ceiling to enable baggage racks to be installed beneath the ceiling above the top deck, with baggage racks (10, 30) for the bottom deck being integrated in the bases (2) of the top deck seats (50).

2. A car according to claim 1, characterized in that the racks (10, 20) for a row of pairs of seats disposed side-by-side are disposed in the longitudinal direction of the car in order to be accessible from in front of the seats.

3. A car according to claim 1, characterized in that the racks (30, 40) of a row of single seats are disposed perpendicularly to the longitudinal direction of the car in order to be accessible from the gangway.

4. A car according to claim 1, characterized in that the racks of a row of single seats are disposed in the longitudinal direction of the car in order to be accessible from in front of the seats.

5. A car according to one of claims 2, 3 or 4, characterized in that the racks (10, 30) for the bottom deck include tilting covers (15, 35).

# FIG.1

# FIG.2

# FIG.3

# FIG.4